# EUROPÄISCHE PATENTANMELDUNG

(11) **EP 2 592 726 A2**
(43) Veröffentlichungstag der Anmeldung: **15.05.2013**
(21) Anmeldenummer: 12185273.5
(22) Anmeldetag: 20.09.2012
(51) Int. Cl.: H02K 9/19, H02K 7/116

(54) **Generatoreinheit**

(30) Priorität: 10.11.2011 DE 102011055192
(71) Anmelder: GKN Walterscheid GmbH, 53797 Lohmar (DE)
(72) Erfinder: Thiel, Manuel, 51570 Windeck-Herchen (DE); Mair am Tinkhof, Günther, 39030 Mühlwald (IT)
(74) Vertreter: Müller, Thomas Michael

(57) **Zusammenfassung**

Generatoreinheit, insbesondere für den Anbau an einen Traktor, welche einen Generator 1 und ein Getriebe 2 umfasst, wobei das Getriebe 2 zum Antreiben des Generators 1 mit diesem antriebsverbunden ist, wobei der Generator 1 einen Kühlkreislauf für Öl aufweist, das Getriebe 2 einen Schmierkreislauf für Öl aufweist und der Schmierkreislauf und der Kühlkreislauf zu einem integrierten Kühl- und Schmierkreislauf miteinander hydraulisch verbunden sind.

## Beschreibung

Die Erfindung betrifft eine Generatoreinheit, insbesondere für den Einbau an einen Traktor, welche einen Generator und ein Getriebe umfasst, wobei das Getriebe zum Antreiben des Generators mit diesem antriebsverbunden ist.

Eine solche Generatoreinheit aus der DE 103 03 050 B4 bekannt. Mit der dort beschriebenen Generatoreinheit lässt sich jeder Traktor mit einer Zapfwelle und einem herkömmlichen Bordnetz derart umrüsten, dass elektrische Lasten mit einer von der Nennspannung des Bordnetzes abweichenden Nennspannung betrieben werden können. Es lässt sich somit ein zusätzliches Bordnetz mit einer höheren Nennspannung aufbauen. Die Generatoreinheit umfasst eine Eingangswelle, die mit einer Zapfwelle des Traktors verbindbar ist, sowie eine Ausgangswelle, die genauso gestaltet ist wie die Zapfwelle des Traktors. Somit kann der mechanische Antrieb der Zapfwelle des Traktors weiterhin genutzt werden. Zusätzlich können elektrische Verbraucher, die eine höhere Bordspannung benötigen, angetrieben werden.

Es hat sich gezeigt, dass der Bedarf an elektrischer Leistung bei landwirtschaftlichen Geräten stetig steigt. Generatoreinheiten, wie sie in der DE 103 03 050 B4 gezeigt sind, können den Bedarf an elektrischer Energie nicht mehr abdecken. Es sind deutlich größere Generatoreinheiten erforderlich, da Leistungen von bis zu 100 kW abgedeckt werden müssen. Dies bedeutet, dass Generatoren eingesetzt werden müssen, die einer besonderen Kühlung bedürfen.

Aufgabe der vorliegenden Erfindung ist es, eine gekühlte Generatoreinheit bereitzustellen, die möglichst kompakt aufgebaut ist, damit sie an einen Traktor ankuppelbar ist, und mobil betrieben werden kann.

Die Aufgabe wird durch eine Generatoreinheit, insbesondere für den Einbau in einen Traktor, gelöst, welche einen Generator und ein Getriebe umfasst, wobei das Getriebe zum Antreiben de Generators mit diesem antriebsverbunden ist. Der Generator weist einen Kühlkreislauf für Öl auf. Das Getriebe weist einen Schmierkreislauf für Öl auf. Hierbei sind der Schmierkreislauf und der Kühlkreislauf zu einem integrierten Kühl- und Schmierkreislauf miteinander hydraulisch verbunden.

Üblicherweise werden getrennte Kreisläufe für die Schmierung des Getriebes und für die Kühlung eines Generators vorgesehen. Dies führt zu einem hohen konstruktiven Aufwand. Zudem weisen solche Einheiten einen hohen Platzbedarf auf. Um einen möglichst hohe Mobilität zu gewährleisten, ist erfindungsgemäß vorgesehen, dass der Schmierkreislauf des Getriebes und der Kühlkreislauf des Generators hydraulisch miteinander verbunden sind, d. h. dasselbe Öl zur Schmierung des Getriebes wird auch zur Kühlung des Generators verwendet. Demnach müssen verschiedene Baugruppen nicht doppelt vorgesehen sein, wie z. B. Ölpumpe und Ölkühler. Bei dem erfindungsgemäßen Aufbau ist es möglich, lediglich eine Ölpumpe und einen Ölkühler vorzusehen.

Vorzugsweise ist in einem Getriebegehäuse des Getriebes der Ölsumpf des gemeinsamen Kühl- und Schmierkreislaufes vorgesehen. Hierbei wird mittels einer Ölpumpe Öl aus dem Ölsumpf dem Ölkühler zugeführt. Ein Pumpengehäuse aus der Ölpumpe kann derart gestaltet sein, dass es mit dem Getriebegehäuse lösbar verbunden ist. Hierbei ist die Ölpumpe vorzugsweise unmittelbar von einer Antriebswelle des Getriebes, über die das Getriebe mit einem Antriebsaggregat antriebsverbindbar ist, angetrieben. Insbesondere beim Einsatz an einem Traktor wird die Ölpumpe somit unmittelbar von dem Antriebsaggregat, d. h. der Zapfwelle des Traktors, angetrieben. Die Ölpumpe dreht somit mit derselben Drehzahl wie die Zapfwelle. Das Getriebe übersetzt von der Antriebswelle zu einer Ausgangswelle derart, dass die Drehzahl erhöht wird, um den Generator mit hoher Drehzahl antreiben zu können. Um möglichst kostengünstige und konstruktiv nicht sehr aufwendige Ölpumpen verwenden zu können, werden vorzugsweise Ölpumpen mit einer geringen Antriebsdrehzahl verwendet. Diese lässt sich dann insbesondere unmittelbar von der Antriebswelle des Getriebes antreiben, also durch eine langsam drehende Antriebswelle. Somit wird der Einsatz aufwendiger und teurer hoch drehender Ölpumpen vermieden.

Das Getriebegehäuse weist einen Gehäuseboden auf, in dem der Ölsumpf des integrierten Kühl- und Schmierkreislaufes vorgesehen ist. In dem Gehäuseboden ist vorzugsweise eine Aufnahmekammer zur Aufnahme eines Zahnrades der Antriebswelle vorgesehen und die Aufnahmekammer reicht bis zu einem Niveau des Ölsumpfes bzw. bis unter ein Niveau des Ölspiegels im Ölsumpf. Vorzugsweise ist hierbei vorgesehen, dass die Aufnahmekammer den Ölsumpf in zwei Sumpfkammern teilt. Die beiden Sumpfkammern können über einen Verbindungskanal miteinander verbunden sein. Die Aufnahmekammer für das Zahnrad der Antriebswelle ist erforderlich, da für eine kompakte Bauform das Zahnrad der Antriebswelle möglichst nah an dem unteren Getriebeboden des Getriebegehäuses angeordnet sein muss. Dies würde jedoch bedeuten, dass ohne eine Aufnahmekammer das Zahnrad der Antriebswelle in das Öl des Ölsumpfes eintaucht und dieses durch Drehen nach oben schleudern würde. Hierbei bestünde die Gefahr, dass durch das aufgewirbelte Öl Luft durch die Ölpumpe angesaugt wird. Um dies zu vermeiden, ist die Aufnahmekammer vorzusehen, welche bis zum dem Niveau des Ölsumpfes bzw. bis unter den Ölspiegel des Ölsumpfes reicht. Das Öl, das zur Schmierung der Zahnräder des Getriebes aufgrund der Schwerkraft nach unten läuft, wird somit zum Teil unmittelbar in den Ölsumpf aber auch in den Aufnahmeraum fließen. In der Aufnahmekammer wird das Öl dann durch Drehung des Zahnrades der Antriebswelle nach oben geschleudert und vorzugsweise über eine Wand der Aufnahmekammer hinweggeschleudert bis an eine Außenwand des Getriebegehäuses, von wo aus das Öl weiter direkt in den Ölsumpf fließt. Im Ölsumpf selbst taucht kein Zahnrad des Zahnradgetriebes ein, so dass dort eine Beruhigung des Öls stattfindet und keine Gefahr besteht, dass Luft von der Ölpumpe angesaugt wird.

Im Fall, dass der Ölsumpf in zwei Sumpfkammern aufgeteilt ist, kann eine Ölpumpe mit zwei Einlassöffnungen vorgesehen sein, wobei jeweils eine Einlassöffnung mit einer der Sumpfkammern im Getriebegehäuse verbunden ist.

Der Kühl- und Schmierkreislauf weist einen Druck führenden Teil und einen drucklosen Teil auf. Der Druck führende Teil erstreckt sich von der Hydraulikpumpe über den Ölkühler bis zum Generator bzw. bis zum Getriebe. Im Generator wird das Öl zur Kühlung vorzugsweise versprüht. Somit ist innerhalb des Generators kein Öldruck mehr vorhanden. Dasselbe gilt für die Schmierung des Getriebes. Auch hier wird drucklos geschmiert, d. h. das Öl fließt ab dem Generator bzw. dem Getriebe aufgrund der Schwerkraft weiter. Daher muss ein Ölfilter, der einen gewissen Öldruck erfordert, im Druck führenden Teil angeordnet sein, zum Beispiel zwischen der Ölpumpe und dem Ölkühler.

Vorzugsweise wird zumindest ein Teilstrom des im Ölkühler gekühlten Öls dem Generator zugeführt. Ein weiterer Teilstrom wird vom Ölkühler dem Getriebe zugeführt.

In einem Generatorgehäuse kann ein Generatorölsumpf vorgesehen sein, der das zur Kühlung des Generators verwendete Öl zwischensammelt. Der Generatorölsumpf ist dann weiter über Ölleitungen mit dem Ölsumpf des Kühl- und Schmierkreislaufs im Getriebegehäuse verbunden. Um zu gewährleisten, dass das Öl durch Schwerkraft vom Generatorölsumpf zum Ölsumpf des Kühl- und Schmierkreislauf fließen kann, ist der Generatorölsumpf auf einem höheren Niveau angeordnet als der Ölsumpf des Kühl- und Schmierkreislaufs.

Das Getriebe weist eine Ausgangswelle auf, die über eine Formschlussverbindung mit einer Rotorwelle des Generators lösbar antriebsverbunden sein kann. Um diese Formschlussverbindung für eine leichte Montage und Demontage zu schmieren ist vorgesehen, dass ein Teilstrom des dem Generator zugeführten Öls der Formschlussverbindung zugeführt wird. Vorzugsweise handelt es sich bei der Formschlussverbindung um eine Keilzahnverbindung, wobei die Ausgangswelle des Getriebes und die Rotorwelle des Rotors jeweils eine äußere Kerbverzahnung aufweisen. Auf den beiden Kerbverzahnungen der Ausgangswelle und der Rotorwelle sitzt eine Verbindungshülse, welche mit inneren Kerbverzahnungen versehen ist. Zur Schmierung dieser Kerbverzahnungen kann in der Rotorwelle eine zentrale Schmierbohrung vorgesehen sein, die bis in einen Zwischenraum führt, der durch die Ausgangswelle, die Rotorwelle und die Verbindungswelle gebildet ist. Hierbei ist die Ausgangswelle auf einem höheren Niveau angeordnet als die Antriebswelle, so dass grundsätzlich der Generator möglichst weit oben angeordnet ist.

Um die Generatoreinheit mit einem Traktor koppeln zu können, weist die Generatoreinheit Kuppelmittel auf.

Ein bevorzugtes Ausführungsbeispiel im folgenden anhand der Zeichnungen näher erläutert. Hierin zeigen
Figur 1 einen Längsschnitt der Getriebeeinheit und
Figur 2 einen Querschnitt des Getriebegehäuses im Bereich des Ölsumpfes.

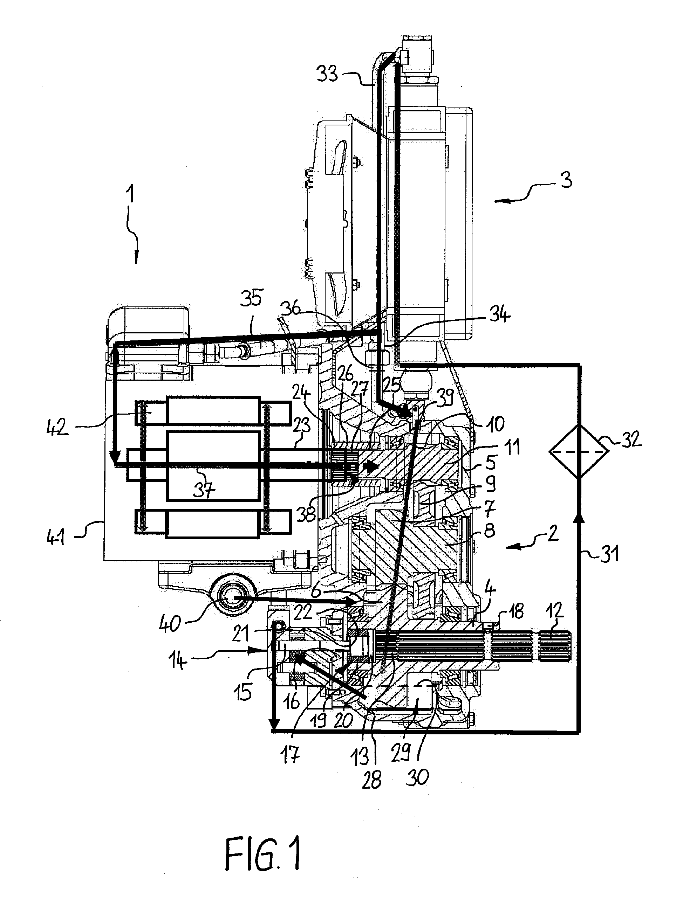

In Figur 1 ist ein Generator 1, ein den Generator 1 antreibendes Getriebe 2 sowie ein Ölkühler 3 dargestellt. Ferner ist schematisch der Kühl- und Schmierkreislauf skizziert. Das Getriebe 2 weist eine Antriebswelle 4 auf, die in einem Getriebegehäuse 5 des Getriebes 2 drehbar gelagert ist und abgedichtet aus dem Getriebegehäuse 5 herausgeführt ist. Die Antriebswelle 4 umfasst ein Zahnrad 6, welches mit einem Zahnrad 7 einer Zwischenwelle 8 kämmt. Die Zwischenwelle 8 ist ebenfalls innerhalb des Getriebegehäuses 5 drehbar gelagert. Die Zwischenwelle 8 weist ein weiteres Zahnrad 9 auf, welches mit einer Verzahnung 10 eine Ausgangswelle 11 kämmt. Die Ausgangswelle 11 ist ebenfalls drehbar im Getriebegehäuse 5 gelagert und abgedichtet aus dem Getriebegehäuse 5 herausgeführt. Die Abtriebswelle 11 ist oberhalb der Antriebswelle 4 angeordnet. Die Antriebswelle 4 und die Ausgangswelle 11 sind an gegenüberliegenden Seiten des Getriebegehäuses 5 aus diesem herausgeführt.

Die Antriebswelle 4 ist als Hohlwelle gestaltet, in welcher ein Antriebszapfen 12 eingesteckt ist, der über eine Kerbzahnverbindung 13 drehfest mit der Antriebswelle 4 verbunden ist. Der Antriebszapfen 12 ist über eine Madenschraube 18 in der Antriebswelle 4 axial gesichert. Der Antriebszapfen 12 dient dazu, mit einer Zapfwelle eines Traktors verbunden zu werden. Hierzu kann eine Gelenkwelle mit dem Antriebszapfen 12 und der Zapfwelle des Traktors antriebsverbunden werden.

An der vom Antriebszapfen 12 abgewandten Seite des Getriebegehäuses 5 ist eine Ölpumpe 14 an das Getriebegehäuse 5 angeflanscht. Die Ölpumpe 14 umfasst eine Antriebswelle 15, welche durch eine Bohrung 16 des Getriebegehäuses 5 in das Innere des Getriebegehäuses 5 hineingeführt ist. Innerhalb des Getriebegehäuses 5 ist die Antriebswelle 15 der Ölpumpe 14 über eine Welle-Narbe-Verbindung 17 mit der Antriebswelle 4 des Getriebes 2 drehfest verbunden. Die Ölpumpe 14 wird somit unmittelbar von einer Antriebswelle 4 des Getriebes 2 und somit direkt von der Zapfwelle mit derselben Drehzahl der Zapfwelle angetrieben.

Zur drehfesten Verbindung der Antriebswelle 15 der Ölpumpe 14 mit der Antriebswelle 4 des Getriebes 2 ist in eine Bohrung 20 der Antriebswelle 4 des Getriebes 2 ein Mitnehmer 19 eingepresst. Der Mitnehmer 19 weist eine innere Kerbverzahnung 21 auf, in welche die Antriebswelle 15 der Ölpumpe 14 mit einer äußeren Kerbverzahnung 22 eingesteckt ist, um eine drehfeste Verbindung sicherzustellen. Vorteil dieser Antriebsverbindung ist, dass die Ölpumpe 14 einfach montiert werden kann, indem beim Anflanschen der Ölpumpe 14 an das Getriebegehäuse 5 die Antriebswelle 15 der Ölpumpe 14 in den Mitnehmer 19 eingesteckt wird. Hierbei ist die Welle-Narbe-Verbindung 17 zum Inneren der als Hohlwelle gestalteten Antriebswelle 4 des Getriebes 2 abgedichtet, damit kein Öl aus dem Getriebegehäuse 5 durch die Antriebswelle 4 des Getriebes 2 auslaufen kann.

Im Bereich der Ausgangswelle 11 des Getriebes 2 ist der Generator 1 an das Getriebegehäuse 5 angeflanscht. Der Generator 1 umfasst eine Rotorwelle 23 mit einer äußeren Kerbverzahnung 24. Die Ausgangswelle 11 des Getriebes 2 weist ebenfalls an einem der Rotorwelle 23 zugewandten Ende eine äußere Kerbverzahnung 25 auf. Über beide Kerbverzahnungen 24, 25 ist eine Verbindungshülse 26 angeordnet, die über eine innere Kerbverzahnung 27 drehfest mit beiden Wellen, d. h. mit der Ausgangswelle 11 und der Rotorwelle 23, verbunden ist, so dass die Ausgangswelle 11 und die Rotorwelle 23 drehfest miteinander verbunden sind. Die Verbindungshülse 26 kann alternativ auch einteilig mit eine der Wellen, nämlich Ausgangswelle 11 oder Rotorwelle 23, ausgebildet sein.

Oberhalb des Getriebegehäuses 5 ist der Ölkühler 3 am Getriebegehäuse 5 befestigt.

Das Getriebegehäuse 5 umfasst einen Gehäuseboden 28, der einen Ölsumpf 29 bildet. Dort sammelt sich das Öl des integrierten Kühl- und Schmierkreislaufs, wobei die gestrichelte Linie 30 das Ölniveau angibt. Die Ölpumpe 14 fördert über eine Hydraulikleitung 31 das Öl aus dem Ölsumpf 29 zum Kühler 3, wobei in der Hydraulikleitung 31 ein Ölfilter 32 vorgesehen ist. Da der Ölfilter 32 im Druck führenden Teil des Kühlkreislaufs angeordnet sein muss, kann der Ölfilter 32 auch in der Hydraulikleitung 33 sitzen. Von dem Ölkühler 3 gelangt das Öl weiter durch eine Hydraulikleitung 33 zu einem T-Stück 34, in dem der Hydraulikstrom in zwei Teilströme in Richtung einer ersten Hydraulikleitung 35 und einer zweiten Hydraulikleitung 36 aufgeteilt wird. Die erste Hydraulikleitung 35 führt zum Generator 1. Dort wird der Teilstrom in eine zentrale Bohrung 37 der Rotorwelle 23 geleitet. Durch hier nicht näher dargestellte Radialbohrungen von der zentralen Bohrung 37 ausgehend wird das Öl radial nach außen geschleudert und versprüht innerhalb eines Generatorgehäuses 41 zur Kühlung der Ständerwicklungen 42.

Die zentrale Bohrung 37 führt ferner bis in einen Zwischenraum 38, der zwischen der Ausgangswelle 11, der Rotorwelle 23 und der Verbindungshülse 26 gebildet ist, so dass die Kerbzahnverbindung an dieser Stelle geschmiert wird.

Durch die zweite Hydraulikleitung 36 wird ein Teilstrom des aus dem Ölkühler 3 austretenden Öls durch eine Bohrung 29 im Getriebegehäuse 5 in das Getriebe 2 geleitet, um dort die Zahnräder zu schmieren.

Das Öl innerhalb des Generatorgehäuses 41 sammelt sich in einem Generatorölsumpf 40 und wird von dort aus weiter in den Ölsumpf 29 des Getriebegehäuses 5 geleitet, so dass der Kühl- und Schmierkreislauf geschlossen ist.

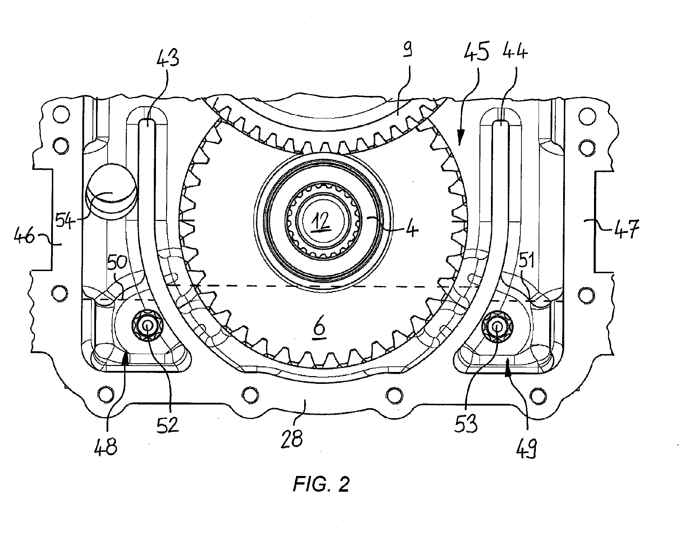

In Figur 2 ist ein Querschnitt des Getriebegehäuses 5 im Bereich des Ölsumpfes 29 dargestellt. Hier ist zu erkennen, dass zwei Gehäusewände 43, 44 ausgehend vom Gehäuseboden 29 nach oben gerichtet verlaufen und eine Aufnahmekammer 45 zur Aufnahme des Zahnrads 6 der Antriebswelle 4 des Getriebes 2 bilden. Die Aufnahmekammer 45 ist nach oben hin geöffnet, um auch einen Zahneingriff des Zahnrads 9 der Zwischenwelle zu ermöglichen. Zwischen den äußeren Gehäusewänden 46, 47 und den Gehäusewänden 43, 44 sind zwei Sumpfkammern 48, 49 gebildet, in denen das Öl gesammelt wird, wobei jeweils die Ölniveaus durch die gestrichelten Linien 50, 51 angedeutet sind. Öl, das in die Aufnahmekammer 45 fließt, wird durch das Zahnrad 6 der Antriebswelle 4 nach oben geschleudert, so dass es über die Gehäusewände 43, 44 geschleudert wird und dann in die Sumpfkammern 48, 49 fließen kann. Diese dienen als Beruhigungskammern, um ein Ansaugen von Luft zu vermeiden. In jeder der Sumpfkammern 48, 49 ist jeweils eine Einlassöffnung 52, 53 der

Ölpumpe 14 zu erkennen. Ferner ist eine Auslassbohrung 54 im Bereich oberhalb einer der Sumpfkammern 48 erkennbar, durch welches das Öl aus dem Generatorsumpf 40 in den Ölsumpf 29 des Getriebes 2 eingeleitet wird.

Um das Niveau in beiden Sumpfkammern 48, 49 gleich hoch zu halten, ist ein Verbindungskanal 55 vorgesehen, der quer zur Antriebswelle 4 verläuft und in Figur 1 erkennbar ist.

### Bezugszeichenliste

- 1: Generator
- 2: Getriebe
- 3: Ölkühler
- 4: Antriebswelle
- 5: Getriebegehäuse
- 6: Zahnrad
- 7: Zahnrad
- 8: Zwischenwelle
- 9: Zahnrad
- 10: Verzahnung
- 11: Ausgangswelle
- 12: Antriebszapfen
- 13: Kerbzahnverbindung
- 14: Ölpumpe
- 15: Antriebswelle
- 16: Bohrung
- 17: Welle-Narbe-Verbindung
- 18: Madenschraube
- 19: Mitnehmer
- 20: Bohrung
- 21: innere Kerbverzahnung
- 22: äußere Kerbverzahnung
- 23: Rotorwelle
- 24: äußere Kerbverzahnung
- 25: äußere Kerbverzahnung
- 26: Verbindungshülse
- 27: innere Kerbverzahnung
- 28: Gehäuseboden
- 29: Ölsumpf
- 30: Ölniveau
- 31: Hydraulikleitung
- 32: Ölfilter
- 33: Hydraulikleitung
- 34: T-Stück
- 35: erste Hydraulikleitung
- 36: zweite Hydraulikleitung
- 37: zentrale Bohrung
- 38: Zwischenraum
- 39: Bohrung
- 40: Generatorölsumpf
- 41: Generatorgehäuse
- 42: Ständerwicklung
- 43: Gehäusewand
- 44: Gehäusewand
- 45: Aufnahmekammer
- 46: äußere Gehäusewand
- 47: äußere Gehäusewand
- 48: Sumpfkammer
- 49: Sumpfkammer
- 50: Ölniveau
- 51: Ölniveau
- 52: Einlassöffnung
- 53: Einlassöffnung
- 54: Auslassbohrung
- 55: Verbindungskanal

## Patentansprüche

1. Generatoreinheit, insbesondere für den Anbau an einen Traktor, welche einen Generator (1) und ein Getriebe (2) umfasst, wobei das Getriebe (2) zum Antreiben des Generators (1) mit diesem antriebsverbunden ist,
**dadurch gekennzeichnet,**
**dass** der Generator (1) einen Kühlkreislauf für Öl aufweist,
**dass** das Getriebe (2) einen Schmierkreislauf für Öl aufweist und
**dass** der Schmierkreislauf und der Kühlkreislauf zu einem integrierten Kühl- und Schmierkreislauf miteinander hydraulisch verbunden sind.

2. Generatoreinheit nach Anspruch 1,
**dadurch gekennzeichnet,**
**dass** in dem Kühl- und Schmierkreislauf ein Ölkühler (3) und eine Ölpumpe (14) vorgesehen sind und
**dass** das Getriebe (2) ein Getriebegehäuse (5) mit einem Ölsumpf (29) des Kühl- und Schmierkreislaufs umfasst.

3. Generatoreinheit nach Anspruch 2,
**dadurch gekennzeichnet,**
**dass** mittels der Ölpumpe (14) Öl aus dem Ölsumpf (29) dem Ölkühler (3) zugeführt wird.

4. Generatoreinheit nach einem der Anspruch 2 oder 3,
**dadurch gekennzeichnet,**
**dass** die Ölpumpe (14) ein Pumpengehäuse aufweist, welches mit dem Getriebegehäuse (5) lösbar verbunden ist.

5. Generatoreinheit nach Anspruch 4,
**dadurch gekennzeichnet,**
**dass** die Ölpumpe (14) unmittelbar von einer Antriebswelle (4) des Getriebes (2), über die das Getriebe mit einem Antriebsaggregat antriebsverbindbar ist, angetrieben ist.

6. Generatoreinheit nach einem der Anspruch 2 bis 5,
**dadurch gekennzeichnet,**
**dass** das Getriebegehäuse (5) einen Gehäuseboden (28) aufweist, in dem der Ölsumpf (29) angeordnet ist,
**dass** im Gehäuseboden (28) eine Aufnahmekammer (45) zur Aufnahme eines Zahnrades (6) der Antriebswelle (4) vorgesehen ist, wobei die Aufnahmekammer (45) den Ölsumpf (29) in zwei Sumpfkammern (48, 49) teilt.

7. Generatoreinheit nach Anspruch 6,
**dadurch gekennzeichnet,**
**dass** ein Verbindungskanal (55) vorgesehen ist, der die beiden Sumpfkammern (48, 49) miteinander verbindet.

8. Generatoreinheit nach einem der Anspruch 6 oder 7,
**dadurch gekennzeichnet,**
**dass** die Ölpumpe (14) ein Pumpengehäuse mit zwei Einlassöffnungen (52, 53) aufweist, die mit zu den Sumpfkammern (48, 49) führenden Bohrungen im Getriebegehäuse (5) verbunden sind.

9. Generatoreinheit nach einem der Ansprüche 2 bis 8,
**dadurch gekennzeichnet,**
**dass** zumindest ein Teilstrom des im Ölkühler (3) gekühlten Öls dem Generator (1) zugeführt wird.

10. Generatoreinheit nach einem der Ansprüche 2 bis 9,
**dadurch gekennzeichnet,**
**dass** ein Teilstrom des im Ölkühler (3) gekühlten Öls dem Getriebe (2) zugeführt wird.

11. Generatoreinheit nach einem der Ansprüche 2 bis 10,
**dadurch gekennzeichnet,**
**dass** der Generator (1) ein Generatorgehäuse (41) mit einem Generatorölsumpf (40) aufweist und
**dass** der Generatorölsumpf (40) mit dem Ölsumpf (29) des Kühl- und Schmierkreislaufs im Getriebegehäuse (5) verbunden ist,
wobei der Generatorölsumpf (40) auf einem höheren oder gleichem Niveau wie der Ölsumpf (29) des Kühl- und Schmierkreislaufs angeordnet ist.

12. Generatoreinheit nach einem der vorangehenden Ansprüche,
**dadurch gekennzeichnet,**
**dass** das Getriebe (2) eine Ausgangswelle (11) aufweist, die über eine Formschlussverbindung mit einer Rotorwelle (23) des Generators (1) lösbar antriebsverbunden ist, und
**dass** ein Teilstrom des dem Generator (1) zugeführten Öls der Formschlussverbindung zugeführt wird.

13. Generatoreinheit nach Anspruch 12,
**dadurch gekennzeichnet,**
**dass** die Ausgangswelle (11) und die Rotorwelle (23) jeweils eine äußere Kerbverzahnung (24, 25) aufweisen, wobei eine Verbindungshülse (26) mit einer inneren Kerbverzahnung (27) vorgesehen ist, die formschlüssig auf der äußeren Kerbverzahnungen (24, 25) der Ausgangswelle (11) und der Rotorwelle (23) sitzt.

14. Generatoreinheit nach Anspruch 13,
**dadurch gekennzeichnet,**
**dass** die Rotorwelle (23) eine zentrale Bohrung (37) aufweist, die in einen Zwischenraum (38) zwischen der Ausgangswelle (11), der Rotorwelle (23) und der Verbindungshülse (26) gebildet ist.

15. Generatoreinheit nach einem der vorangehenden Ansprüche,
**dadurch gekennzeichnet,**
**dass** Kuppelmittel vorgesehen sind, mit denen die Generatoreinheit an einen Traktor kuppelbar ist.
